# EUROPÄISCHE PATENTSCHRIFT

(11) **EP 4 473 817 B1**
(45) Veröffentlichungstag und Bekanntmachung des Hinweises auf die Patenterteilung: **10.06.2026**
(21) Anmeldenummer: 24168693.0
(22) Anmeldetag: 05.04.2024
(51) Int. Cl.: A01B 76/00, B60R 1/28, A01B 69/00, B60R 1/22

(54) **KAMERASYSTEM FÜR EINE LANDWIRTSCHAFTLICHE ARBEITSMASCHINE**
CAMERA SYSTEM FOR AN AGRICULTURAL WORKING MACHINE
SYSTÈME DE CAMÉRA POUR MACHINE DE TRAVAIL AGRICOLE

(30) Priorität: 06.06.2023 DE 102023114862
(43) Veröffentlichungstag der Anmeldung: 11.12.2024
(73) Patentinhaber: CLAAS E-Systems GmbH, 49201 Dissen (DE)
(72) Erfinder: Schröder, Axel, 33332 Gütersloh (DE); Korthals, Timo, 33818 Leopoldshöhe (DE); Redenius, Jannik, 32361 Pr. Oldendorf (DE); Töniges, Torben, 33602 Bielefeld (DE); Kildeby, Allan, 3060 Espergærde (DK); Jürschik, Peter, 33335 Gütersloh (DE); Bone, Sven, 49124 Georgsmarienhütte (DE); Monkenbusch, Robin, 33378 Rheda-Wiedenbrück (DE)
(74) Vertreter: CLAAS Gruppe

(56) Entgegenhaltungen:
- EP-A1- 2 743 132
- EP-B1- 3 272 586
- DE-A1- 102016 209 270
- DE-A1- 4 339 600
- US-A1- 2012 099 763

## Beschreibung

Die vorliegende Erfindung betrifft eine landwirtschaftliche Arbeitsmaschine mit einem Kamerasystem gemäß dem Oberbegriff von Anspruch 1.

Beansprucht sind landwirtschaftliche Arbeitsmaschinen aller Art. Dies betrifft Zugmaschinen, insbesondere Traktoren, aber auch Erntemaschinen wie Mähdrescher und Feldhäcksler. Diese können mit einem Anbaugerät, beispielsweise über eine Geräteschnittstelle wie einen Heckkraftheber oder einen Frontkraftheber, ausgestattet werden. Sie können zusätzlich oder alternativ einen Anhänger ziehen. Die landwirtschaftlichen Arbeitsmaschinen, und ggf. das Anbaugerät, möglicherweise in Form eines Anhängers, werden üblicherweise zur Feldbearbeitung verwendet.

Der bekannte Stand der Technik (EP 2 743 132 A1), von dem die Erfindung ausgeht, betrifft eine landwirtschaftliche Arbeitsmaschine mit einem Kamerasystem.

Dieses weist eine mobile Kamera auf, die flexibel und einfach in verschiedene Aufnahmen an der landwirtschaftlichen Arbeitsmaschine, einem Anbaugerät oder einem Anhänger befestigt werden kann. Eine Steuereinheit des Kamerasystems erkennt automatisch die Position der Kamera und konfiguriert die Kamera und die Anzeige dem Anwendungsfall entsprechend. Die Bilddaten der Kamera werden auf einem Display, üblicherweise in einer Kabine der landwirtschaftlichen Arbeitsmaschine, angezeigt. Die Steuereinheit kann zusätzlich eine Bildverarbeitung der Kamerasignale durchführen, um zu erkennen, ob ein bestimmtes Objekt, z.B ein sich näherndes Auto, von der Kamera erfasst wird.

Die Verwendung von Aufnahmen ist jedoch unflexibel, da letztlich nur wenige Positionen zur Befestigung der Kamera vorgesehen sind.

Es ist dabei eine Herausforderung, den bekannten Stand der Technik zu verbessern.

Der Erfindung liegt das Problem zugrunde, das bekannte Kamerasystem derart auszugestalten und weiterzubilden, dass hinsichtlich der genannten Herausforderung eine weitere Optimierung erreicht wird.

Das obige Problem wird durch die Kombination der Merkmale des Anspruchs 1 gelöst.

Wesentlich ist die grundsätzliche Überlegung, dass die Kamera so ausgestaltet werden kann, dass diese frei an der landwirtschaftlichen Arbeitsmaschine anordenbar ist und dennoch eine Konfiguration möglich ist, die die Position der Kamera, den aktuellen Arbeitsvorgang oder dergleichen berücksichtigt. Dafür wird eine Bilderkennung in den Bilddaten ausgeführt und basierend auf in den Bilddaten erkannten Objekten wird ein Konfigurationsdatensatz für die Optik der Kamera und/oder die Anzeige der Bilddaten geladen.

Ein beispielhafter Ablauf, der die Vorteile der Erfindung verdeutlicht, sieht vor, dass ein Nutzer zwei Kameras als Außenspiegelersatz in Halterungen befestigt an seiner landwirtschaftlichen Arbeitsmaschine hat. Bei einem Überladevorgang von Erntegut besteht nun exemplarisch weniger Bedarf an einem Seitenspiegel, sodass der Nutzer eine der Kameras magnetisch an dem Dach der landwirtschaftlichen Arbeitsmaschine befestigt, sodass die Kamera auf den Anhänger des Ladefahrzeugs gerichtet ist. Da die Steuereinheit diesen Anwendungsfall beispielhaft noch nicht kennt, lädt die Steuereinheit einen Default-Konfigurationsdatensatz, in dem die Optik das maximale Weitwinkelbild anzeigt und auf dem Display Steuerelemente einblendet, mit denen der Nutzer die Optik verstellen kann. Der Nutzer stellt die Optik nach Bedarf ein. Wird nun zu einem späteren Vorgang die Kamera, oder auch die andere Kamera, wieder ähnlich an der landwirtschaftlichen Arbeitsmaschine befestigt und auf einen Überladevorgang gerichtet, erkennt die Steuereinheit, dass wieder ein Teil eines Anhängers mit Erntegut und ein Teil eines Abtankrohrs im Bild erkennbar ist und ermittelt, dass die Ähnlichkeit zu der vorherigen Situation groß ist. Die Steuereinheit lädt daher die zuletzt verwendete Konfiguration.

Analog können natürlich auch bereits Konfigurationsdatensätze hinterlegt sein und auch kamerafremde Daten zur Situationserkennung verwendet werden. Gegenüber einer Kamera, die nur in vordefinierten Aufnahmen verwendet werden kann, ist das vorschlagsgemäße Kamerasystem deutlich flexibler. Mit modernen auf künstlicher Intelligenz basierenden Systemen ist die Erkennung von ausreichend Objekten, um Situationen zu erkennen, auf hohem Niveau möglich.

Im Einzelnen wird vorgeschlagen, dass die Kamera ein Befestigungselement aufweist, mit dem die Kamera frei an der landwirtschaftlichen Arbeitsmaschine positionierbar und befestigbar ist, dass die Steuereinheit bei frei positionierter Kamera in den Bilddaten Objekte detektiert, dass die Steuereinheit abhängig von den in den Bilddaten detektierten Objekten einen von mehreren vordefinierten Konfigurationsdatensätzen auswählt, dass die Konfigurationsdatensätze Einstellungen für eine Optik der Kamera und/oder für die Anzeige der Bilddaten auf dem Display enthalten und dass die Steuereinheit die Optik der Kamera und/oder die Anzeige der Bilddaten entsprechend der Einstellungen des ausgewählten Konfigurationsdatensatzes konfiguriert.

Dass die Kamera frei positionierbar und befestigbar ist, meint, dass das Befestigungselement und die Kamera so ausgestaltet sind, dass diese unabhängig von speziellen Aufnahmen an der landwirtschaftlichen Arbeitsmaschine, beispielsweise magnetisch, befestigt werden können.

Bei einer bevorzugten Ausgestaltung gemäß Anspruch 2 ist vorgesehen, dass die Kamera außerdem in speziellen Aufnahmen befestigt werden kann. Die Aufnahmen weisen vorzugsweise ein Identifikationselement auf, mit dem die jeweilige Aufnahme identifiziert werden kann. Den Aufnahmen können dann ebenfalls Konfigurationsdatensätze zugeordnet sein, sodass die Konfiguration in den Aufnahmen anders funktioniert als bei freier Anordnung. So ist eine präzisere Konfiguration für häufige Positionen einfacher möglich. Die Aufnahmen können auch zum Aufladen einer Batterie verwendet werden. Außerdem kann die Befestigung an der Aufnahme robuster sein.

Gemäß Anspruch 3 kann das Befestigungselement magnetisch sein und/oder dem Befestigungselement kann eine doppelte Funktion für die Befestigung innerhalb und außerhalb der Aufnahme zukommen.

Weiter kann vorgesehen sein, dass die Kamera aus den Bilddaten ihre Position und/oder Orientierung ermittelt (Anspruch 6). Sofern im jeweiligen Fall diese Erkennung möglich ist, kann die Konfiguration entsprechend ausgewählt werden. Ist die Auswahl der Konfigurationsdatensätze, wie vorzugsweise, ähnlichkeitsbasiert, kommt es auch nicht auf eine exakte Positionsbestimmung an. Wenn die Position der Kamera nur grob bekannt ist und grob mit einem bekannten Fall übereinstimmt, kann das ausreichen.

Anspruch 7 betrifft eine Ausgestaltung der bereits angesprochenen ähnlichkeitsbasierten Auswahl des Konfigurationsdatensatzes.

Passt keiner der vorhandenen Konfigurationsdatensätze kann gemäß Anspruch 8 ein Default-Konfigurationsdatensatz verwendet werden. Gemäß Anspruch 9 merkt sich die Steuereinheit Konfigurationsänderungen insbesondere des Default-Konfigurationsdatensatzes, vorzugsweise zusammen mit Situationsparametern, und speichert diese als neue Konfigurationsdatensätze für zukünftige Verwendungen.

Anspruch 10 betrifft Zusatzdaten, die vorzugsweise in den Bilddaten angezeigt werden. Diese können mit den Bilddaten verbunden oder aus diesen ermittelt werden. Abhängig von der jeweiligen Situation kann beispielsweise eine Füllstandsanzeige eines Korntanks relevant oder irrelevant sein.

Gemäß Anspruch 11 werden situationsabhängig Zusatzfunktionen wie eine Hinderniserkennung oder eine Personenerkennung oder dergleichen aktiviert. Diese sind nur in manchen Situationen relevant.

Anspruch 12 betrifft eine Möglichkeit, wie eine Position der Kamera zur Unterstützung der Auswahl des Konfigurationsdatensatzes ermittelt werden kann. Insbesondere kann dafür eine Triangulation über Funkverbindungen genutzt werden oder beispielsweise ermittelt werden, welcher drahtlose Empfänger oder Sender der Kamera am nächsten liegt. Besonders interessant ist, dass dafür Sender und/oder Empfänger der Aufnahme oder Aufnahmen verwendet werden können.

Anspruch 15 betrifft eine bevorzugte Ausgestaltung, bei der die landwirtschaftliche Arbeitsmaschine ein Anbaugerät darüber erkennt, dass sie eine Verbindung zu einer Aufnahme herstellt. Die Erkennung von Anbaugeräten, insbesondere solchen, die keine Busverbindung aufbauen und sich nicht selbst identifizieren, ist zur passgenauen Einstellung der landwirtschaftlichen Arbeitsmaschine notwendig. Dafür sind beispielsweise QR-Codes an dem Aufnahmegerät und dergleichen bekannt. Vorliegend können diese bekannten Mittel entfallen und die Aufnahme erfährt eine Doppelverwendung.

Im Folgenden wird die Erfindung anhand einer lediglich Ausführungsbeispiele darstellenden Zeichnung näher erläutert. In der Zeichnung zeigt
- Fig. 1: eine landwirtschaftliche Arbeitsmaschine mit Anhänger und verschiedenen Positionen, an denen die mobile Kamera positioniert werden könnte und
- Fig. 2: schematisch die Anzeige von Bilddaten gemäß unterschiedlicher Konfigurationsdatensätze und die Befestigung der Kamera in einer Aufnahme.

In den Figuren dargestellt ist eine landwirtschaftliche Arbeitsmaschine 2 mit einem Kamerasystem 1.

Die landwirtschaftliche Arbeitsmaschine 2 kann beispielhaft ein Traktor sein. Das Kamerasystem 1 weist ein Display 3, eine mobile Kamera 4 und eine Steuereinheit 5 auf. In den Figuren ist das Kamerasystem 1 im Einsatz dargestellt, wobei das Display 3 ein Display 3 der landwirtschaftlichen Arbeitsmaschine 2 ist oder als zusätzliches Display 3 in der Kabine der landwirtschaftlichen Arbeitsmaschine 2 angeordnet. Allgemein ist das Display 3 in einer Kabine der landwirtschaftlichen Arbeitsmaschine 2 platzierbar. Die Kamera 4 erzeugt Bilddaten 6, die von der Steuereinheit 5 auf dem Display 3 angezeigt werden. Vorliegend werden diverse Verfahrensschritte beschrieben, die das Kamerasystem 1 ausführt. Es versteht sich, dass dafür das Kamerasystem 1 entsprechend eingerichtet, insbesondere programmiert, ist.

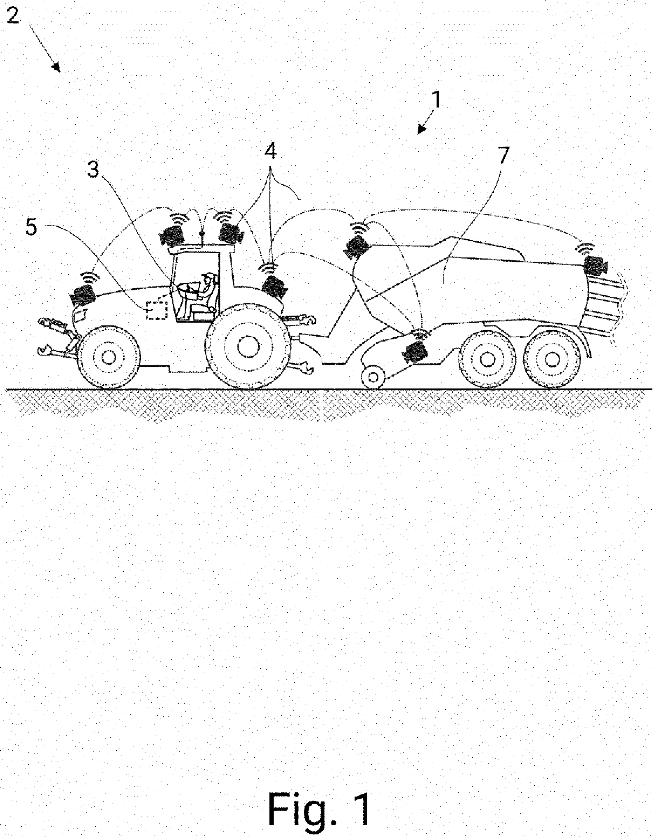

Wesentlich ist nun, dass die Kamera 4 ein Befestigungselement aufweist, mit dem die Kamera 4 frei, insbesondere an der landwirtschaftlichen Arbeitsmaschine 2 und je nach Umfeld der landwirtschaftlichen Arbeitsmaschine auch in deren Umfeld und/oder Anbaugeräten und dergleichen, positionierbar und befestigbar ist. Die Befestigung erfolgt derart, dass die Kamera 4 wieder lösbar ist. Beispielsweise ist das Befestigungselement ein Neodym Magnet. Mit diesem Befestigungselement kann die Kamera 4 an der landwirtschaftlichen Anbaumaschine und vorzugsweise diversen Anbaugeräten 7 und dergleichen befestigt werden. In diversen Anwendungsfällen ist eine solche freie Positionierbarkeit vorteilhaft, um Arbeitsvorgänge aus frei gewählten Winkeln beobachten zu können. Frei meint dabei, wie eingangs definiert, dass die Positionen nicht vorgegeben sind, sondern lediglich davon abhängen, ob das Befestigungselement die Befestigung zulässt. Beispielsweise hält ein Magnet nicht an jeder Oberfläche. Fig. 1 zeigt rein beispielhaft diverse mögliche Positionen, an denen die Kamera 4 positioniert werden kann.

Im vorschlagsgemäßen Anwendungsfall bei frei positionierter Kamera 4 detektiert die Steuereinheit 5 in den Bilddaten 6 Objekte 8. Es kann zusätzlich vorgesehen sein, dass die Steuereinheit 5 auch in anderen Anwendungsfällen Objekte 8 detektiert. Die Steuereinheit 5 wählt abhängig von den in den Bilddaten 6 detektierten Objekten 8 einen von mehreren vordefinierten Konfigurationsdatensätzen 9 aus.

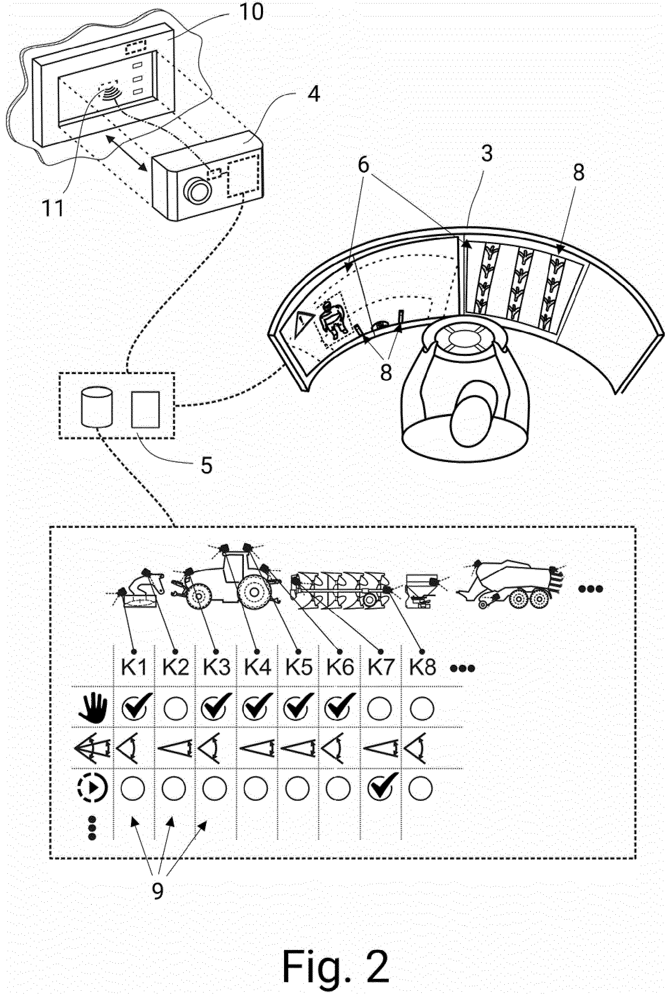

Fig. 2 zeigt diverse Konfigurationsdatensätze 9 abhängig von der Positionierung der Kamera 4. Beispielhaft wird in den Konfigurationsdatensätzen 9 festgelegt, ob eine Hinderniserkennung erfolgt, auf welchen Winkel die Optik der Kamera 4 eingestellt wird und ob ein Auslöser für eine Standbildfunktion auf dem Display 3 als Overlay direkt zugänglich angezeigt wird. Weitere Konfigurationsmöglichkeiten sind das Einblenden von Fahrspuren oder anderen Zusatzinformationen, usw.

Der Begriff "Objekte" ist hier weit zu verstehen. Insbesondere kann die Objekterkennung ein Zwischenschritt für eine Szenenerkennung sein. Auch können die Objekte 8 generell datentechnische Objekte 8 wie Vorgänge und dergleichen sein. Nur vorzugsweise handelt es sich um physische Objekte 8. Wichtig ist nur, dass die Erkennung zumindest teilweise aus den Bilddaten 6 erfolgt, damit die Kamera 4 tatsächlich frei positioniert werden kann.

Allgemein ist vorgesehen, dass die Konfigurationsdatensätze 9 Einstellungen für eine Optik der Kamera 4 und/oder für die Anzeige der Bilddaten 6 auf dem Display 3 enthalten und dass die Steuereinheit 5 die Optik der Kamera 4 und/oder die Anzeige der Bilddaten 6 entsprechend der Einstellungen des ausgewählten Konfigurationsdatensatzes 9 konfiguriert.

Zusätzlich ist hier und vorzugsweise vorgesehen, dass die Kamera 4 zusätzlich in mindestens einer an der landwirtschaftlichen Arbeitsmaschine 2 und/oder mindestens einer an einem Anbaugerät 7 fest montierten Aufnahme 10 befestigbar ist. Auch in der Aufnahme 10 nimmt die Kamera 4 Bilddaten 6 auf. Die Position der Kamera 4 ist dann vorzugsweise bereits bekannt und muss nicht ermittelt werden. Eine oder mehrere Aufnahmen 10 können an Positionen befestigt sein, an denen die Kamera 4 häufig verwendet wird und/oder robuster befestigt werden soll.

Die Aufnahme 10 weist hier und vorzugsweise ein Identifikationselement 11 auf, das mit der Kamera 4 zusammenwirkt. Insbesondere identifiziert die Aufnahme 10 das Vorhandensein der Kamera 4 und/oder die Kamera 4 erkennt eine Identifikation der Aufnahme 10. Die Kamera 4 und/oder die Aufnahme 10 übermittelt diese Information vorzugsweise an die Steuereinheit 5.

Somit stellt die Steuereinheit 5 hier und vorzugsweise durch das Zusammenwirken der Kamera 4 mit dem Identifikationselement 11 fest, in welcher Aufnahme 10 die Kamera 4 angeordnet ist und wählt einen der Aufnahme 10 zugeordneten Konfigurationsdatensatz 9 aus. Durch die Zuordnung von Konfigurationsdatensätzen 9 zu Aufnahmen 10 ist eine präzisere Konfiguration möglich. Die Zuordnung der Kamera 4 zu einer Position ist dann ohne Unsicherheit möglich.

Gerade die Kombination ist vorteilhaft. Die Kamera 4 kann zum Beispiel standardmäßig in einer Aufnahme 10 angeordnet werden, jedoch für seltenere Anwendungsfälle flexibel auch außerhalb positioniert werden. Hier und vorzugsweise weist die Aufnahme 10 elektronische Komponenten auf, insbesondere zur Kommunikation mit Steuereinheit 5. Dafür kann die Aufnahme 10 auch eine Kommunikation der Kamera 4 mit der Steuereinheit 5 weiterleiten. Zusätzlich kann die Kamera 4 hier und vorzugsweise drahtlos mit der Steuereinheit 5 kommunizieren, insbesondere falls sie frei angeordnet ist. Hier und vorzugsweise weist die Kamera 4 eine Batterie auf, die in der Aufnahme 10 geladen wird.

Weiter ist hier und vorzugsweise vorgesehen, dass das Befestigungselement einen Magneten aufweist, und/oder, dass die Kamera 4, zumindest auch, mittels des Befestigungselements in der Aufnahme 10 befestigbar ist. Diese Doppelnutzung des Befestigungselements ist besonders effizient.

Erfindungsgemäß ist vorgesehen, dass die Steuereinheit 5 aus den in den Bilddaten 6 detektierten Objekten 8 in den Bilddaten 6 abgebildete landwirtschaftliche Arbeitsvorgänge ermittelt. Zusätzlich oder alternativ kann die Steuereinheit 5 Arbeitsvorgangsdaten von der landwirtschaftlichen Arbeitsmaschine 2 empfangen. Ist die Steuereinheit 5 Teil der landwirtschaftlichen Arbeitsmaschine 2 meint dies, dass sie die Arbeitsvorgangsdaten ausliest oder von einer anderen Komponente der landwirtschaftlichen Arbeitsmaschine 2 empfängt. Vorzugsweise umfassen die Arbeitsvorgangsdaten eingestellte Maschinenparameter der landwirtschaftlichen Arbeitsmaschine 2 und/oder einen geplanten Arbeitsvorgang und/oder einen Fahrmodus oder dergleichen. Ein Arbeitsvorgang ist beispielsweise ein Überladen.

Diese und alle weiteren Beschreibungen beziehen sich erfindungsgemäß auf den Fall der frei angeordneten Kamera 4.

Weiter ist hier und vorzugsweise vorgesehen, dass die Steuereinheit 5 abhängig von den ermittelten Arbeitsvorgängen und/oder den empfangenen Arbeitsvorgangsdaten den Konfigurationsdatensatz 9 auswählt. Erkennt die Steuereinheit 5 beispielsweise aus den Bilddaten 6 ein Überladerohr und aus den Arbeitsvorgangsdaten, dass gerade übergeladen wird, wählt die Steuereinheit 5 einen Konfigurationsdatensatz 9 aus, in dem Funktionen wie eine Hinderniserkennung deaktiviert sind und zeigt in den Bilddaten 6 einen Füllstand des Korntanks der landwirtschaftlichen Arbeitsmaschine 2 an. Außerdem stellt die Steuereinheit 5 an der Optik der Kamera 4 beispielsweise einen minimalen Zoom ein, damit der Füllstand des Anhängers, auf den übergeladen wird, gut erkennbar ist. Entsprechend muss der Nutzer die Kamera 4 beispielhaft nur schnell so platzieren, dass der Anhänger im Bild ist und sich sonst um nichts kümmern.

In einem Ausführungsbeispiel ermittelt die Steuereinheit 5 bei frei positionierter Kamera 4 aus den in den Bilddaten 6 detektierten Objekten 8 eine Position der Kamera 4 relativ zu der landwirtschaftlichen Arbeitsmaschine 2 und/oder eine Orientierung der Kamera 4 relativ zu der landwirtschaftlichen Arbeitsmaschine 2 und wählt abhängig von der ermittelten Position und/oder der ermittelten Orientierung den Konfigurationsdatensatz 9 aus. Zur Positionsermittlung kann die Kamera 4 zum Beispiel diverse Objekte 8 erkennen und mit bekannten Positionen und zugeordneten Objekten 8 und Objektpositionen im Bild vergleichen. Es kann vorgesehen sein, dass die Steuereinheit 5 nur einige definierte Positionen erkennt und nicht jegliche Position. Auch kann die Steuereinheit 5 dafür zusätzliche Informationen heranziehen. Hier und vorzugsweise wird, insbesondere nur, eine ungefähre Position erkannt. Das kann jedoch völlig ausreichen. Wird die Kamera 4 beispielsweise als Rückspiegelersatz genutzt, ist es an dem Nutzer, die Kamera 4 gemäß seiner Präferenzen zu positionieren und die Steuereinheit 5 muss nur erkennen, dass sie einen Rückspiegelkonfigurationsdatensatz laden soll.

Weiter ist hier und vorzugsweise vorgesehen, dass den Konfigurationsdatensätzen 9 zugeordnete Situationen abbildende Situationsparameter den vordefinierten Konfigurationsdatensätzen 9 zugeordnet sind. Es wird also manchen, insbesondere allen, Konfigurationsdatensatzen 9 eine Situation zugeordnet, in der der Konfigurationsdatensatz 9 zum Einsatz kommen soll. Die Steuereinheit 5 ermittelt abhängig von den in den Bilddaten 6 detektierten Objekten 8, insbesondere von den ermittelten Arbeitsvorgängen und/oder der ermittelten Position und/oder der ermittelten Orientierung, und vorzugsweise den empfangenen Arbeitsvorgangsdaten über die Situationsparameter Ähnlichkeitsmaße zwischen einer aktuellen Situation der Kamera 4 und den den Konfigurationsdatensätzen 9 zugeordneten Situationen. Dann wählt die Steuereinheit 5 den Konfigurationsdatensatz 9 abhängig von den ermittelten Ähnlichkeitsmaßen aus. Die Verwendung einer Ähnlichkeit von Situationen ist hier besonders interessant. Am obigen Beispiel des Überladens ist erkennbar, dass die Steuereinheit 5 nur wenige Informationen benötigt, um erkennen zu können, dass die aktuelle Verwendung der Kamera 4 ähnlicher zu einer bekannten Verwendung bei einem Überladevorgang ist, als beispielsweise zu einer Verwendung als Rückspiegelersatz. Weder muss die Steuereinheit 5 dafür die genaue Position der Kamera 4 kennen noch viele Objekte 8 in den Bilddaten 6 erkennen. Entsprechend einfach ist die vorschlagsgemäße Lehre umsetzbar.

Ebenfalls bevorzugt ist, dass einer der Konfigurationsdatensätze 9 ein Default-Konfigurationsdatensatz ist. Vorzugsweise ist es dabei so, dass die Steuereinheit 5 den Default-Konfigurationsdatensatz auswählt, wenn die Ähnlichkeitsmaße unter einem Schwellwert liegen. Passt also keine der bekannten Situationen zum aktuellen Anwendungsfall, wechselt die Steuereinheit 5 in einen Modus, in dem sie beispielsweise das maximale Sichtfeld bei minimalem Zoom anzeigt und Konfigurationselemente für die Optik beispielsweise zum Zoomen und/oder Verschwenken einblendet. Der Nutzer kann dann schnell eine gewünschte Konfiguration einstellen.

Weiter ist hier und vorzugsweise vorgesehen, dass die Steuereinheit 5 Konfigurationsänderungen eines Nutzers, insbesondere ausgehend von dem Default-Konfigurationsdatensatz, als neuen Konfigurationsdatensatz 9 abspeichert. Vorzugsweise, ermittelt die Steuereinheit 5 zu dem neuen Konfigurationsdatensatz 9 Situationsparameter aus den detektierten Objekten 8. In einer zukünftigen ähnlichen Verwendung erinnert sich die Steuereinheit 5 quasi an die gelernte Situation und nutzt die Konfiguration, die der Nutzer vorher eingestellt hat. Besonders effektiv funktioniert dies wieder über eine Ähnlichkeit, da eine exakt identische Situation wahrscheinlich nicht erneut auftritt.

Je nach Einstellung der Anzeige der Bilddaten 6 zeigt die Steuereinheit 5 hier und vorzugsweise Zusatzinformationen auf dem Display 3 an, die die Steuereinheit 5 aus einer von den Bilddaten 6 unabhängigen Quelle bezieht. Zusätzlich oder alternativ ist vorgesehen, dass die Steuereinheit 5 je nach Einstellung der Anzeige der Bilddaten 6 Zusatzinformationen aus den Bilddaten 6 ermittelt und anzeigt. Sinnvolle Zusatzinformationen wurden oben bereits erwähnt.

Weiter ist hier und vorzugsweise vorgesehen, dass die Steuereinheit 5 abhängig vom gewählten Konfigurationsdatensatz 9 auf Bildverarbeitung basierende Zusatzfunktionen wie eine Hinderniserkennung aktiviert oder deaktiviert und vorzugsweise konfiguriert.

Denkbar ist außerdem, dass die Kamera 4 mittels drahtloser Verbindung mit einem, vorzugsweise mehreren, Sendern und/oder Empfängern der landwirtschaftlichen Arbeitsmaschine 2, insbesondere der Aufnahme 10 oder Aufnahmen 10, verbindbar ist. Die Steuereinheit 5 kann dann eine Position der Kamera 4 über die Verbindung ermitteln, insbesondere durch Triangulation. Diese Doppelnutzung der Aufnahmen 10 ist besonders interessant. Eine landwirtschaftliche Arbeitsmaschine 2 kann einen oder mehrere Sender und/oder Empfänger aufweisen. Zusätzlich können eine oder mehrere Aufnahmen 10 vorgesehen sein, die ebenfalls jeweils einen Sender und/oder Empfänger aufweisen können. Somit stehen möglicherweise mehrere Sender und/oder Empfänger zur Verfügung und die Position der Kamera 4 relativ zur landwirtschaftlichen Arbeitsmaschine 2 kann recht genau ermittelt werden. Stehen zur Triangulation nicht ausreichend Sender und/oder Empfänger zur Verfügung, ist schon die Information interessant, welcher Sender und/oder Empfänger überhaupt in Reichweite ist oder eine hohe Signalstärke aufweist.

Weiter ist hier und vorzugsweise vorgesehen, dass die landwirtschaftliche Arbeitsmaschine 2 eine Ersterkennung eines Anbaugerätes 7, an dem eine Aufnahme 10 für die Kamera 4 befestigt ist, durchführt, indem die landwirtschaftliche Arbeitsmaschine 2 eine drahtlose Verbindung zu der Aufnahme 10 herstellt und dass die landwirtschaftliche Arbeitsmaschine 2 das Anbaugerät 7 betreffende Maschinenparameter basierend auf der Ersterkennung einstellt. Mit dem Begriff "Ersterkennung" ist diejenige erste Erkennung gemeint, die bei einem Anbau des Anbaugerätes 7 die erste ist. Basierend auf dieser Erkennung wird bekanntermaßen die landwirtschaftliche Arbeitsmaschine 2 so eingestellt, dass die Kombination aus landwirtschaftlicher Arbeitsmaschine 2 und Anbaugerät 7 optimiert funktioniert. Dafür sind beispielsweise Verfahren bekannt, bei denen ein Nutzer einen QR Code am Anbaugerät 7 per Smartphone scannt. Es ist schnell ersichtlich, dass die vorschlagsgemäße Lösung effizienter ist. Durch das Kamerasystem 1 identifiziert die landwirtschaftliche Arbeitsmaschine 2 das Anbaugerät 7 selbst. Nicht unter den Begriff "Ersterkennung" fällt jegliche andere Erkennung, bei der die landwirtschaftliche Arbeitsmaschine 2 das Anbaugerät 7 beispielsweise im Rahmen der Objekterkennung erneut erkennt. Selbstredend kann die Ersterkennung bei jeder Verbindung zwischen landwirtschaftlicher Arbeitsmaschine 2 und Anbaugerät 7 erneut durchgeführt werden.

### Bezugszeichenliste

- 1: Kamerasystem
- 2: landwirtschaftliche Arbeitsmaschine
- 3: Display
- 4: Kamera
- 5: Steuereinheit
- 6: Bilddaten
- 7: Anbaugerät
- 8: Objekte
- 9: Konfigurationsdatensatz
- 10: Aufnahme
- 11: Identifikationselement

## Patentansprüche

1. Landwirtschaftliche Arbeitsmaschine (2) mit einem Kamerasystem, wobei das Kamerasystem (1) ein Display (3), eine mobile Kamera (4) und eine Steuereinheit (5) aufweist, wobei das Display (3) in einer Kabine der landwirtschaftlichen Arbeitsmaschine (2) platzierbar ist,
wobei die Kamera (4) Bilddaten (6) erzeugt, die von der Steuereinheit (5) auf dem Display (3) angezeigt werden,
wobei die Kamera (4) ein Befestigungselement aufweist, mit dem die Kamera (4) frei, insbesondere an der landwirtschaftlichen Arbeitsmaschine (2), positionierbar und befestigbar ist, wobei
die Steuereinheit (5) bei frei positionierter Kamera (4) in den Bilddaten (6) Objekte (8) detektiert, wobei die Steuereinheit (5) abhängig von den in den Bilddaten (6) detektierten Objekten (8) einen von mehreren vordefinierten Konfigurationsdatensätzen (9) auswählt, wobei die Konfigurationsdatensätze (9) Einstellungen für eine Optik der Kamera (4) und/oder für die Anzeige der Bilddaten (6) auf dem Display (3) enthalten, wobei die Steuereinheit (5) die Optik der Kamera (4) und/oder die Anzeige der Bilddaten (6) entsprechend der Einstellungen des ausgewählten Konfigurationsdatensatzes (9) konfiguriert,
wobei die Steuereinheit (5) aus den in den Bilddaten (6) detektierten Objekten (8) in den Bilddaten (6) abgebildete landwirtschaftliche Arbeitsvorgänge ermittelt, und/oder die Steuereinheit (5) Arbeitsvorgangsdaten von der landwirtschaftlichen Arbeitsmaschine (2) empfängt, wobei vorzugsweise die Arbeitsvorgangsdaten eingestellte Maschinenparameter der landwirtschaftlichen Arbeitsmaschine (2) und/oder einen geplanten Arbeitsvorgang und/oder einen Fahrmodus oder dergleichen umfassen.

2. Landwirtschaftliche Arbeitsmaschine (2) nach Anspruch 1, **dadurch gekennzeichnet, dass** die Kamera (4) zusätzlich in mindestens einer an der landwirtschaftlichen Arbeitsmaschine (2) und/oder mindestens einer an einem Anbaugerät (7) fest montierten Aufnahme (10) befestigbar ist, vorzugsweise, dass die Aufnahme (10) ein Identifikationselement (11) aufweist, das mit der Kamera (4) zusammenwirkt, dass die Steuereinheit (5) durch das Zusammenwirken der Kamera (4) mit dem Identifikationselement (11) feststellt, in welcher Aufnahme (10) die Kamera (4) angeordnet ist und einen der Aufnahme (10) zugeordneten Konfigurationsdatensatz (9) auswählt.

3. Landwirtschaftliche Arbeitsmaschine (2) nach Anspruch 1 oder 2, **dadurch gekennzeichnet, dass** das Befestigungselement einen Magneten aufweist, und/oder, dass die Kamera (4), zumindest auch, mittels des Befestigungselements in der Aufnahme (10) befestigbar ist.

4. Landwirtschaftliche Arbeitsmaschine (2) nach Anspruch 3, **dadurch gekennzeichnet, dass** die Steuereinheit (5) abhängig von den ermittelten Arbeitsvorgängen und/oder den empfangenen Arbeitsvorgangsdaten den Konfigurationsdatensatz (9) auswählt.

5. Landwirtschaftliche Arbeitsmaschine (2) nach einem der vorhergehenden Ansprüche, **dadurch gekennzeichnet, dass** die Steuereinheit (5) bei frei positionierter Kamera (4) aus den in den Bilddaten (6) detektierten Objekten (8) eine Position der Kamera (4) relativ zu der landwirtschaftlichen Arbeitsmaschine (2) und/oder eine Orientierung der Kamera (4) relativ zu der landwirtschaftlichen Arbeitsmaschine (2) ermittelt und abhängig von der ermittelten Position und/oder der ermittelten Orientierung den Konfigurationsdatensatz (9) auswählt.

6. Landwirtschaftliche Arbeitsmaschine (2) nach einem der vorhergehenden Ansprüche, **dadurch gekennzeichnet, dass** den vordefinierten Konfigurationsdatensätzen (9) den Konfigurationsdatensätzen (9) zugeordnete Situationen abbildende Situationsparameter zugeordnet sind, dass die Steuereinheit (5) abhängig von den in den Bilddaten (6) detektierten Objekten (8), insbesondere von den ermittelten Arbeitsvorgängen und/oder der ermittelten Position und/oder der ermittelten Orientierung, und vorzugsweise den empfangenen Arbeitsvorgangsdaten über die Situationsparameter Ähnlichkeitsmaße zwischen einer aktuellen Situation der Kamera (4) und den den Konfigurationsdatensätzen (9) zugeordneten Situationen ermittelt und den Konfigurationsdatensatz (9) abhängig von den ermittelten Ähnlichkeitsmaßen auswählt.

7. Landwirtschaftliche Arbeitsmaschine (2) nach Anspruch 6, **dadurch gekennzeichnet, dass** einer der Konfigurationsdatensätze (9) ein Default-Konfigurationsdatensatz ist, vorzugsweise, dass die Steuereinheit (5) den Default-Konfigurationsdatensatz auswählt, wenn die Ähnlichkeitsmaße unter einem Schwellwert liegen.

8. Landwirtschaftliche Arbeitsmaschine (2) nach Anspruch 7, **dadurch gekennzeichnet, dass** die Steuereinheit (5) Konfigurationsänderungen eines Nutzers, insbesondere ausgehend von dem Default-Konfigurationsdatensatz, als neuen Konfigurationsdatensatz (9) abspeichert, vorzugsweise, dass die Steuereinheit (5) zu dem neuen Konfigurationsdatensatz (9) Situationsparameter aus den detektierten Objekten (8) ermittelt.

9. Landwirtschaftliche Arbeitsmaschine (2) nach einem der vorhergehenden Ansprüche, **dadurch gekennzeichnet, dass** je nach Einstellung der Anzeige der Bilddaten (6) die Steuereinheit (5) Zusatzinformationen auf dem Display (3) anzeigt, die die Steuereinheit (5) aus einer von den Bilddaten (6) unabhängigen Quelle bezieht, und/oder, dass die Steuereinheit (5) je nach Einstellung der Anzeige der Bilddaten (6) Zusatzinformationen aus den Bilddaten (6) ermittelt und anzeigt.

10. Landwirtschaftliche Arbeitsmaschine (2) nach einem der vorhergehenden Ansprüche, **dadurch gekennzeichnet, dass** die Steuereinheit (5) abhängig vom gewählten Konfigurationsdatensatz (9) auf Bildverarbeitung basierende Zusatzfunktionen wie eine Hinderniserkennung aktiviert oder deaktiviert und vorzugsweise konfiguriert.

11. Landwirtschaftliche Arbeitsmaschine (2) nach einem der vorhergehenden Ansprüche, **dadurch gekennzeichnet, dass** die Kamera (4) mittels drahtloser Verbindung mit einem, vorzugsweise mehreren, Sendern und/oder Empfängern der landwirtschaftlichen Arbeitsmaschine (2), insbesondere der Aufnahme (10) oder Aufnahmen (10), verbindbar ist und dass die Steuereinheit (5) eine Position der Kamera (4) über die Verbindung ermittelt, insbesondere durch Triangulation.

12. Landwirtschaftliche Arbeitsmaschine nach Anspruch 11, **dadurch gekennzeichnet, dass** die landwirtschaftliche Arbeitsmaschine (2) eine Ersterkennung eines Anbaugerätes (7), an dem eine Aufnahme (10) für die Kamera (4) befestigt ist, durchführt, indem die landwirtschaftliche Arbeitsmaschine (2) eine drahtlose Verbindung zu der Aufnahme (10) herstellt und dass die landwirtschaftliche Arbeitsmaschine (2) das Anbaugerät (7) betreffende Maschinenparameter basierend auf der Ersterkennung einstellt.

## Claims

1. Agricultural working machine (2) with a camera system, wherein the camera system (1) has a display (3), a mobile camera (4) and a control unit (5), wherein the display (3) can be placed in a cab of the agricultural working machine (2),
wherein the camera (4) generates image data (6), which are displayed on the display (3) by the control unit (5), wherein the camera (4) has a fastening element, with which the camera (4) can be freely positioned and fastened, in particular on the agricultural working machine (2), wherein, with the camera (4) freely positioned, the control unit (5) detects objects (8) in the image data (6), wherein, dependent on the objects (8) detected in the image data (6), the control unit (5) selects one of a number of predefined configuration datasets (9), wherein the configuration datasets (9) contain settings for an optical system of the camera (4) and/or for the display of the image data (6) on the display (3), wherein the control unit (5) configures the optical system of the camera (4) and/or the display of the image data (6) in accordance with the settings of the selected configuration dataset (9),
wherein the control unit (5) determines from the objects (8) detected in the image data (6) agricultural operations depicted in the image data (6), and/or the control unit (5) receives operation data from the agricultural working machine (2), wherein preferably the operation data comprise set machine parameters of the agricultural working machine (2) and/or a planned operation and/or a driving mode or the like.

2. Agricultural working machine (2) according to Claim 1, **characterized in that** the camera (4) can additionally be fastened in at least one mounting (10) fixed on the agricultural working machine (2) and/or on an attachment (7), preferably **in that** the mounting (10) has an identification element (11), which interacts with the camera (4), **in that** the control unit (5) establishes by the interaction of the camera (4) with the identification element (11) in which mounting (10) the camera (4) is arranged and selects a configuration dataset (9) assigned to the mounting (10).

3. Agricultural working machine (2) according to Claim 1 or 2, **characterized in that** the fastening element has a magnet, and/or **in that** the camera (4) can, at least also, be fastened by means of the fastening element in the mounting (10).

4. Agricultural working machine (2) according to Claim 3, **characterized in that**, dependent on the operations determined and/or the operation data received, the control unit (5) selects the configuration dataset (9).

5. Agricultural working machine (2) according to one of the preceding claims, **characterized in that**, with the camera (4) freely positioned, the control unit (5) determines from the objects (8) detected in the image data (6) a position of the camera (4) relative to the agricultural working machine (2) and/or an orientation of the camera (4) relative to the agricultural working machine (2) and selects the configuration dataset (9) dependent on the position determined and/or the orientation determined.

6. Agricultural working machine (2) according to one of the preceding claims, **characterized in that** the predefined configuration datasets (9) are assigned situation parameters depicting situations assigned to the configuration datasets (9), **in that**, dependent on the objects (8) detected in the image data (6), in particular on the operations determined and/or the position determined and/or the orientation determined, and preferably the operation data received, the control unit (5) determines by way of the situation parameters similarity measures between a current situation of the camera (4) and the situations assigned to the configuration datasets (9) and selects the configuration dataset (9) dependent on the similarity measures determined.

7. Agricultural working machine (2) according to Claim 6, **characterized in that** one of the configuration datasets (9) is a default configuration dataset, preferably **in that** the control unit (5) selects the default configuration dataset when the similarity measures lie below a threshold value.

8. Agricultural working machine (2) according to Claim 7, **characterized in that** the control unit (5) stores configurational changes made by a user, in particular on the basis of the default configuration dataset, as a new configuration dataset (9), preferably **in that** the control unit (5) determines situation parameters from the detected objects (8) in relation to the new configuration dataset (9).

9. Agricultural working machine (2) according to one of the preceding claims, **characterized in that**, according to the setting of the display of the image data (6), the control unit (5) displays on the display (3) additional information which the control unit (5) obtains from a source independent from the image data (6), and/or **in that** the control unit (5) determines and displays additional information from the image data (6) according to the setting of the display of the image data (6).

10. Agricultural working machine (2) according to one of the preceding claims, **characterized in that**, dependent on the chosen configuration dataset (9), the control unit (5) activates or deactivates, and preferably configures, image-processing-based additional functions such as an obstacle detection.

11. Agricultural working machine (2) according to one of the preceding claims, **characterized in that** the camera (4) can be connected by means of wireless connection to a, preferably a number of, transmitter(s) and/or receiver(s) of the agricultural working machine (2), in particular of the mounting (10) or mountings (10), and **in that** the control unit (5) determines a position of the camera (4) by way of the connection, in particular by triangulation.

12. Agricultural working machine according to Claim 11, **characterized in that** the agricultural working machine (2) carries out an initial detection of an attachment (7) to which a mounting (10) for the camera (4) is fastened, **in that** the agricultural working machine (2) establishes a wireless connection to the mounting (10) and **in that** the agricultural working machine (2) sets machine parameters concerning the attachment (7) on the basis of the initial detection.

## Revendications

1. Machine de travail agricole (2) avec un système de caméra, le système de caméra (1) comportant un écran (3), une caméra (4) mobile et une unité de commande (5), l'écran (3) pouvant être placé dans une cabine de la machine de travail agricole (2),
la caméra (4) générant des données d'image (6), qui sont affichées sur l'écran (3) par l'unité de commande (5), la caméra (4) comportant un élément de fixation, avec lequel la caméra (4) peut être positionnée et fixée librement, en particulier sur la machine de travail agricole (2), l'unité de commande (5) détectant des objets (8) dans les données d'image (6) lorsque la caméra (4) est positionnée librement, l'unité de commande (5) sélectionnant un ensemble de données de configuration (9) parmi plusieurs ensembles de données de configuration prédéfinis en fonction des objets (8) détectés dans les données d'image (6), les ensembles de données de configuration (9) contenant des réglages pour une unité optique de la caméra (4) et/ou pour l'affichage des données d'image (6) sur l'écran (3), l'unité de commande (5) configurant l'unité optique de la caméra (4) et/ou l'affichage des données d'image (6) conformément aux réglages de l'ensemble de données de configuration (9) sélectionné,
l'unité de commande (5) déterminant des processus de travail agricoles représentés dans les données d'image (6) à partir des objets (8) détectés dans les données d'image (6), et/ou l'unité de commande (5) recevant des données de processus de travail de la machine de travail agricole (2), les données de processus de travail comprenant de préférence des paramètres de machine réglés de la machine de travail agricole (2) et/ou un processus de travail planifié et/ou un mode de conduite ou similaire.

2. Machine de travail agricole (2) selon la revendication 1, **caractérisée en ce que** la caméra (4) peut être fixée en supplément dans au moins un logement (10) monté de manière fixe sur la machine de travail agricole (2) et/ou sur un accessoire (7), de préférence **en ce que** le logement (10) comporte un élément d'identification (11), qui coopère avec la caméra (4), **en ce que** l'unité de commande (5) constate, en coopération avec la caméra (4) avec l'élément d'identification (11) le logement (10), dans lequel la caméra (4) est disposée, et sélectionne un ensemble de données de configuration (9) associé au logement (10).

3. Machine de travail agricole (2) selon la revendication 1 ou 2, **caractérisée en ce que** l'élément de fixation comporte un aimant et/ou **en ce que** la caméra (4) peut être fixée, au moins également, dans le logement (10) au moyen de l'élément de fixation.

4. Machine de travail agricole (2) selon la revendication 3, **caractérisée en ce que** l'unité de commande (5) sélectionne l'ensemble de données de configuration (9) en fonction des processus de travail déterminés et/ou des données de processus de travail reçues.

5. Machine de travail agricole (2) selon l'une des revendications précédentes, **caractérisée en ce que** lorsque la caméra (4) est positionnée librement, l'unité de commande (5) détermine une position de la caméra (4) par rapport à la machine de travail agricole (2) et/ou une orientation de la caméra (4) par rapport à la machine de travail agricole (2) à partir des objets (8) détectés dans les données d'image (6) et sélectionne en fonction de la position déterminée et/ou de l'orientation déterminée l'ensemble de données de configuration (9).

6. Machine de travail agricole (2) selon l'une des revendications précédentes, **caractérisée en ce que** des paramètres de situation reproduisant des situations associées aux ensembles de données de configuration (9) sont associés aux ensembles de données de configuration (9) prédéfinis, que l'unité de commande (5) détermine en fonction des objets (8) détectés dans les données d'image (6), en particulier des processus de travail déterminés et/ou de la position déterminée et/ou de l'orientation déterminée, de préférence, des données de processus de travail reçues par les paramètres de situation des mesures de similarité entre une situation actuelle de la caméra (4) et les situations associées aux ensembles de données de configuration (9) et sélectionne l'ensemble de données de configuration (9) en fonction des mesures de similarité déterminées.

7. Machine de travail agricole (2) selon la revendication 6, **caractérisée en ce que** l'un des ensembles de données de configuration (9) est un ensemble de données de configuration par défaut, de préférence que l'unité de commande (5) sélectionne l'ensemble de données de configuration par défaut lorsque les mesures de similarité se situent en dessous d'une valeur de seuil.

8. Machine de travail agricole (2) selon la revendication 7, **caractérisée en ce que** l'unité de commande (5) sauvegarde des modifications de configuration d'un utilisateur, en particulier en partant de l'ensemble de données de configuration par défaut, en tant que nouvel ensemble de données de configuration (9), de préférence que l'unité de commande (5) détermine des paramètres de situation à partir des objets (8) détectés pour le nouvel ensemble de données de configuration (9).

9. Machine de travail agricole (2) selon l'une des revendications précédentes, **caractérisée en ce que** l'unité de commande (5) affiche sur l'écran (3), selon le réglage de l'affichage des données d'image (6), des informations supplémentaires que l'unité de commande (5) obtient d'une source indépendante des données d'image (6), et/ou que l'unité de commande (5) détermine et affiche des informations supplémentaires à partir des données d'image (6) selon le réglage de l'affichage des données d'image (6).

10. Machine de travail agricole (2) selon l'une des revendications précédentes, **caractérisée en ce que** l'unité de commande (5) active ou désactive et de préférence configure des fonctions supplémentaires basées sur un traitement d'image, comme une détection d'obstacles, en fonction de l'ensemble de données de configuration (9) sélectionné.

11. Machine de travail agricole (2) selon l'une des revendications précédentes, **caractérisée en ce que** la caméra (4) peut être reliée au moyen d'une liaison sans fil à un, de préférence à plusieurs émetteurs et/ou récepteurs de la machine de travail agricole (2), en particulier au logement (10) ou aux logements (10), et **en ce que** l'unité de commande (5) détermine une position de la caméra (4) par la liaison, en particulier par triangulation.

12. Machine de travail agricole selon la revendication 11, **caractérisée en ce que** la machine de travail agricole (2) effectue une identification initiale d'un accessoire (7), sur lequel est fixé un logement (10) pour la caméra (4) **en ce que** la machine de travail agricole (2) établit une liaison sans fil avec le logement (10) et **en ce que** la machine de travail agricole (2) règle des paramètres de machine concernant l'accessoire (7) sur la base de l'identification initiale.
